# EUROPÄISCHE PATENTANMELDUNG

(11) **EP 1 166 615 A1**
(43) Veröffentlichungstag der Anmeldung: **02.01.2002**
(21) Anmeldenummer: 01114620.6
(22) Anmeldetag: 19.06.2001
(51) Int. Cl.: A01D 34/82

(54) **Reinigungseinrichtung und Mähwerk**

(30) Priorität: 20.06.2000 US 597069
(71) Anmelder: DEERE & COMPANY, Moline, Illinois 61265-8098 (US)
(72) Erfinder: Thorman, Christopher Scott, Beaver Dam, WI 53916 (US); Holland, Ronald Paul, Fox Lane, WI 53933 (US)
(74) Vertreter: Magin, Ludwig Bernhard

(57) **Zusammenfassung**

Es wird eine Reinigungseinrichtung (24) vorgeschlagen, die einen gerichteten Flüssigkeitsstrahl in das Innere des Mähwerks (10) einleitet und dabei auch für die gleichzeitige Reinigung mehrerer Schneidkammern (14) geeignet ist.

## Beschreibung

Die Erfindung betrifft eine Reinigungseinrichtung sowie ein Mähwerk mit einer Schneidkammer, wenigstens einem in der Schneidkammer rotierbar antreibbaren Schneidmesser und mit einer Reinigungseinrichtung.

Mähwerke, welche sowohl durch private als auch professionelle Anwender zur Landschaftspflege eingesetzt werden können, weisen üblicherweise eine oder mehrere Schneidkammern auf, die drehbare Schneidmesser umgeben. Eine solche Landschaftspflege umfasst das Schneiden von Rasen unter einer Vielzahl von Bedingungen und oftmals in Situationen, in denen das Gras nass ist. Das Schneiden des nassen Grases erhöht das Problem, dass Grasabschnitte an der Unterseite der Schneidkammern, wie auch an den sich nach unten erstreckenden Wänden, welche die Kammer einschließen, haften bleiben. Ein Ansammeln des nassen Grases neigt dazu, mehrere bemerkbare Probleme zu verursachen. Erstens fallen die Grasabschnitte manchmal in Klumpen aus der Schneidkammer auf den frisch geschnittenen Rasen, wodurch sein Erscheinungsbild negativ beeinträchtigt wird. Zweitens stellt es bei Mähgeräten, welche Auswurfkanäle aufweisen, ein Problem dar, dass es zu einem Verstopfen der Kanäle kommen kann, welches den Transport von Grasabschnitten zu einem Sammelbehälter behindert, wodurch eine Demontage verschiedener Teile notwendig wird, um die angesammelte Ablagerung zu entfernen. Drittens kann Gras, das sich an der Innenseite der Mähkammer ansammelt, auf den aus der Mähkammer austretenden Abschnittsstrom derart einwirken, dass das gleichmäßige Schnittbild des Mähgeräts unterbrochen wird. Viertens begünstigt eine Ansammlung nasser Grasabschnitte eine Zersetzung des oftmals metallischen Schneidgehäuses insbesondere auf Grund von Rost. Fünftens sind Grasabschnitte, welche an der Innenseite des Schneidgehäuses haften, die Ursache von Geruch, welcher den üblichen Lagerplatz des Mähgeräts beeinträchtigen kann.

Um die angesammelten Ablagerungen zu entfernen, bietet der Stand der Technik eine bekannte Lösung zur Reinigung der Unterseite des Schneidgehäuses an. Bei dieser Lösung wird ein Reinigungsmittel, wie beispielsweise Wasser, in das Schneidgehäuses eingespritzt, wobei die Schneidmesser entweder nicht angetrieben oder auch angetrieben werden können. Um eine Reinigung durchzuführen, ist eine Vorrichtung vorgesehen, welche einen Anschluss aufweist, an welchem eine Sprühdüse unterschiedlicher Ausführung angebracht sein kann. Ist der Anschluss an einer Außenseite des Schneidgehäuses angeordnet, wird die Sprühdüse in eine einzelne Öffnung, die an der Oberseite oder in einer Seitenwand des Schneidgehäuses vorgesehen ist, eingesetzt. Nachdem die Sprühdüse in die Öffnung eingesetzt ist, ist die Sprühdüse oberhalb des Schneidmessers angeordnet. Es wird dem Schneidgehäuse Wasser über einen üblichen Gartenschlauch zugeführt, welcher mit dem Anschluss und so mit der Sprühdüse verbunden ist. In Abhängigkeit von dem speziellen Design der Sprühdüse und davon, ob die Schneidmesser ein- oder ausgekuppelt bzw. angetrieben oder auch nicht angetrieben sind, wird dem Schneidgehäuse Wasser zugeführt. Die Wasserverteilung kann durch eine Rotation der Schneidmesser unterstützt werden, wenn es gewünscht wird, einen scheuernden Effekt zu erzielen und dadurch die Oberflächen der Unterseite zu reinigen. Eine solche Anordnung kann beispielsweise der US-A-3,040,990 entnommen werden.

Eine solche Lösung erfordert jedoch die Verwendung mehrerer Schläuche und/oder Verbindungen, wenn eine Bedienungsperson es wünscht, die unteren Oberflächen von mehreren Schneidkammern gleichzeitig zu reinigen. Eine Verwendung eines Systems mit mehreren Verbindungen kann den Wasserdruck, der an die Schneidkammern geliefert werden kann, reduzieren, wodurch nur eine ineffektive Reinigung der Schneidkammern erzielt wird. Es ist daher nötig, dass eine Bedienungsperson den Schlauch an jeden Anschluss separat anschließt, um eine Reinigung eines Mähwerks mit mehreren Schneidkammern zu ermöglichen.

Dass der Erfindung zugrunde liegende Problem wird darin gesehen, dass die Reinigung von Mähwerken, insbesondere von Mähwerken mit mehreren Schneidkammern, zeitaufwendig ist, da jede Schneidkammer einzeln gereinigt werden muss, um ein gutes Reinigungsergebnis zu erzielen.

Dieses Problem wird erfindungsgemäß durch die Lehre der Patentansprüche 1 bzw. 11 gelöst, wobei in den weiteren Patentansprüchen die Lösung in vorteilhafter Weise weiterentwickelnde Merkmale aufgeführt sind.

Auf diese Weise wird es einer Bedienungsperson erlaubt, mehr als eine Schneidkammer zur gleichen Zeit zu reinigen. Die Reinigungseinrichtung weist Flüssigkeit abgebende Düsen auf. welche ein Reinigungsmittel, wie beispielsweise Wasser, über die Ausdehnung jeder Schneidkammer und oberhalb des in diesen jeweils angeordneten Schneidmessers liefern. Wenn das Wasser in der Schneidkammer verteilt wird, bringt ein angetriebenes Schneidmesser das Wasser in der Schneidkammer in Zirkulation, wodurch ein Zentrifugeneffekt erzeugt wird, welcher ein Abscheuern der Unterseite der Schneidkammer erlaubt.

An der Schneidkammer kann eine abgewinkelte Halterung vorgesehen sein, welche ein Anschlussstück, welches beispielsweise in der Art einer Schnellkupplung ausgeführt sein kann, zum Anschluss an eine Wasserzufuhr, wie beispielsweise an einen üblichen Gartenschlauch, aufweist. Mit dem Anschlussstück und der Halterung ist eine Leitung verbunden, welche vorzugsweise im wesentlichen in einer Ebene mit einer äußeren Seitenfläche der Schneidkammer angeordnet ist. Mit einem anderen Endbereich kann die Leitung an einer Anschlussplatte befestigt sein, welche die Leitung mit einem Flüssigkeit verteilenden Zusammenbau verbindet, welcher an eine untere Kante eines vorderen Flansches der Schneidkammer angrenzend angeordnet ist, um Wasser zu einer Unterseite der Schneidkammer(n) zu liefern.

Dieser Zusammenbau kann derart ausgebildet sein, dass er einen Wasserstrahl sowohl zu den Seiten der Spindel der Schneidmesser sowie über die Schneidmesser richtet. Der Aufbau des Zusammenbaus weist zwei aneinander befestigte Platten auf. Eine dieser Platten ist eben ausgebildet, während die andere einen darin angeordneten Kanal aufweist. Wenn Wasser von der Leitung in diesen Zusammenbau eintritt, wird es durch den Kanal zu Endbereichen geleitet, welche Stellen aufweist, wo der Kanal selbst sich in der Höhe anhebt. Wenn Wasser sich entlang dieser erhöhten Oberflächen bewegt, tritt es in eine Düse ein, welche durch den Druck der ebenen Platte gegen den Kanal gebildet wird. Danach, während es durch die Düse und zu einem Ausgang davon gelangt, wird das Wasser gegen die Unterseite der ebenen Platte getrieben. Ein Kontakt mit der ebenen Platte bewirkt, dass das Wasser in einen fächerförmigen Strahl verteilt wird, der durch die Düse abgegeben wird. Der Strahl kann durch eine Teileinrichtung, die in die Oberfläche des Kanals eingeformt und in jedem der Endbereiche angeordnet ist, weiter aufgeteilt werden. Diese Trennung erlaubt es dem Wasser, in zwei deutliche Strahlen aufgeteilt zu werden, welche zu jeder Seite der Spindel, an der die Schneidmesser angebracht sind, gerichtet sind. Mit einer üblichen Druckrate beaufschlagt, so wie sie in der häuslichen Umgebung bzw. im Garten verwendet wird, reichen sie über die Ausdehnung der Schneidkammer hinüber, wobei sie eine Seitenfläche der Schneidkammer berühren, welche derjenigen gegenüberliegt, an der er eingetreten ist. Nach dem Durchströmen der Schneidkammer, wird das durch den Zusammenbau abgegebene Wasser, welches die gegenüberliegende Seite berührt, nach unten abgelenkt, um auf die Schneidmesser aufzutreffen. Durch den Kontakt mit den Schneidmessern und dem Luftzug, der durch die Schneidmesser bewirkt wird, wird das zugeführte Wasser durch den Innenraum der Schneidkammer und auf seine Unterseiten verteilt.

Es wird in Betracht gezogen, dass die zuvor beschriebene Reinigungseinrichtung als eine Baugruppe hergestellt wird, welche für Mähwerke gedacht ist, die im Einzelhandel erhältlich sind. Bei dieser Konstruktion können sowohl die abgewinkelte Halterung, die Leitung und die Anschlussplatte als eine einteilige Baugruppe zusammengeschweißt sein. Es kann jedoch sein, dass eine Bedienungsperson es wünscht, die Reinigungseinrichtung im Ersatzteilhandel bzw. nach dem Kauf des Mähwerks mit der Absicht zu erwerben, ein bereits gekauftes Mähwerk durch eine solche Reinigungseinrichtung nachzurüsten. Um dieser Anforderung nachzukommen, kann die Reinigungseinrichtung mit einer flexiblen Leitung, welche einstellbar/veränderbar mit der Halterung und der Anschlussplatte verbunden werden kann, ausgestattet werden. Ein Zur-Verfügung-Stellen, dieser Option, ermöglicht eine Vielseitigkeit bei der Anordnung der Reinigungseinrichtung mit Bezug zu den äußeren Oberflächen des Mähwerks. Dieser Aspekt ist wichtig für Benutzer, welche möglicherweise Mähwerke haben, welche eine Gestaltung aufweisen, die es ansonsten nicht erlauben würde, ein Design mit festgelegten Gesamtausmaßen anzubringen.

Entsprechend ist es einem Benutzer mit jeder Form der Reinigungseinrichtung möglich, gleichzeitig die Unterseite eines Mähwerks mit einer oder mehreren Schneidkammern zu reinigen.

In der Zeichnung ist ein nachfolgend näher beschriebenes Ausführungsbeispiel der Erfindung dargestellt. Es zeigt:
- Fig. 1: eine perspektivische Ansicht eines Mähwerks von seitlich vorn und oben,
- Fig. 2: eine Ansicht des Mähwerks von unten,
- Fig. 3: eine Ansicht einer Reinigungseinrichtung von vorn,
- Fig. 4: eine leicht gekippte Darstellung der Reinigungseinrichtung aus Fig. 3,
- Fig. 5: eine Explosionsdarstellung entsprechend der Darstellung in Fig. 3,
- Fig. 6: eine Darstellung entsprechend Fig. 3, wobei
- Fig. 6a: eine vergrößerte Teilansicht eines Bereichs der Reinigungseinrichtung aus Fig. 6 darstellt,
- Fig. 7: eine Ansicht einer zweiten Platte der Reinigungseinrichtung aus Fig. 3,
- Fig. 7a: eine weitere Ansicht der zweiten Platte aus Fig. 7,
- Fig. 8: eine Darstellung eines Schneidmessers, das mit dem dargestellten Mähwerk bzw. der Reinigungseinrichtung verwendet werden kann,
- Fig. 9: eine Seitenansicht eines Endbereichs des in Fig. 8 dargestellten Schneidmessers,
- Fig. 10: einen Querschnitt entlang der Linie 10-10 aus Fig. 8 und
- Fig. 11: eine Explosionsdarstellung einer zweiten Ausführungsform der Reinigungseinrichtung.

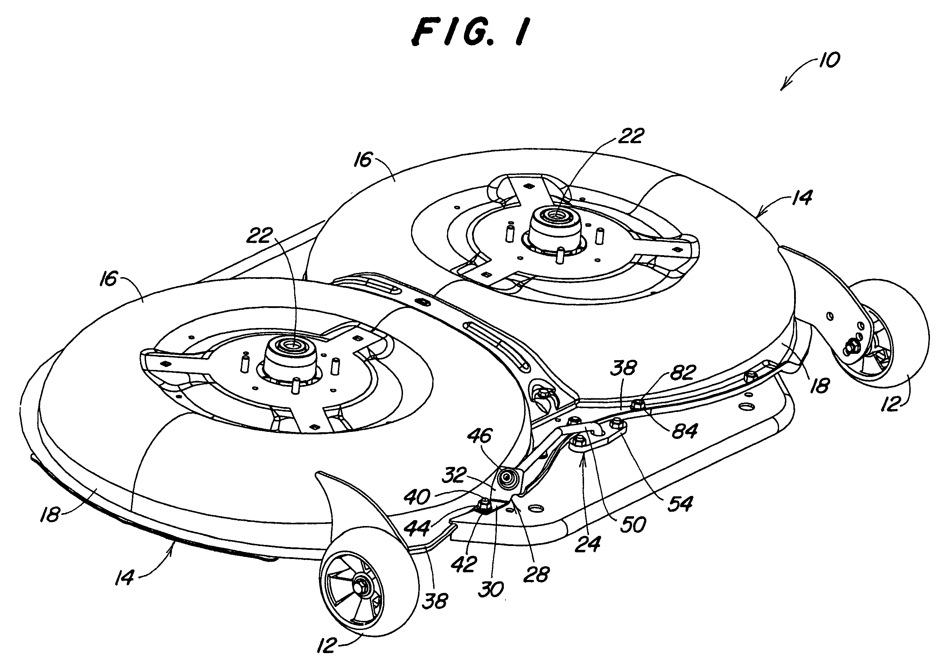

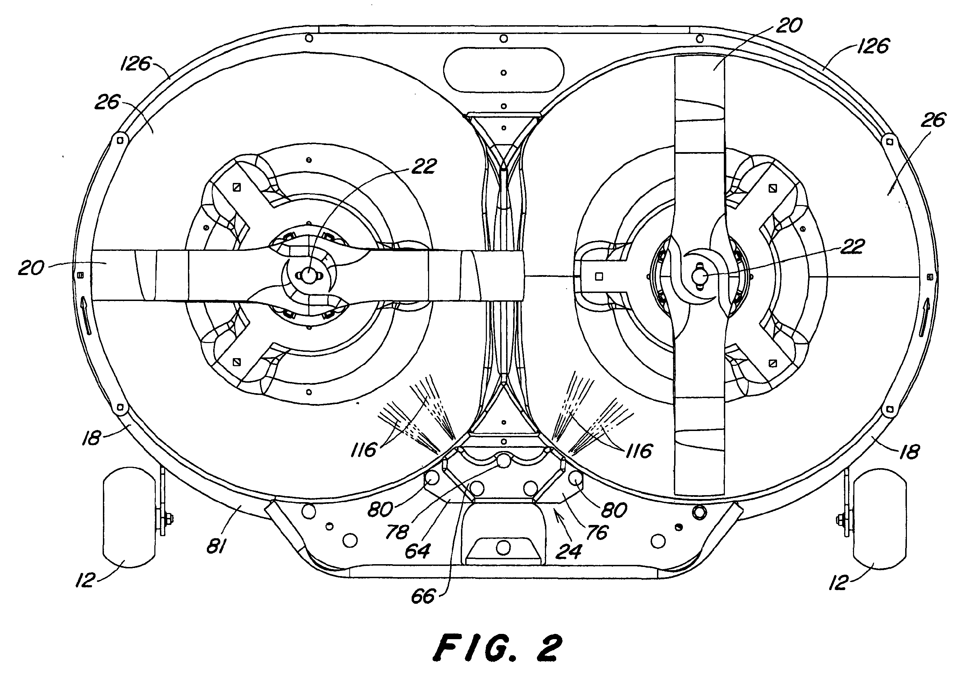

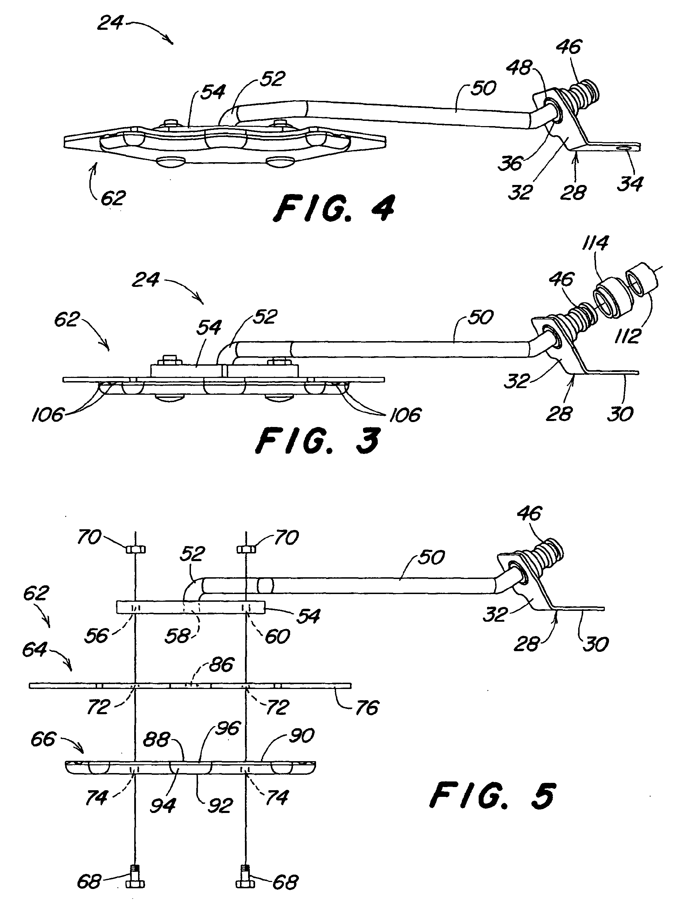

Es wird zuerst auf die Figuren 1 und 2 Bezug genommen, in denen ein Mähwerk 10 gezeigt wird, welches sich auf dem Untergrund abstützende Räder 12 und zwei Schneidkammern 14 aufweist. Die Schneidkammern 14 weisen Oberseiten 16 und abhängige, umgebende Schürzen bzw. Seitenwandungen 18 auf. In jeder Schneidkammer 14 und daher von einer Seitenwandung 18 umgeben, ist ein Schneidmesser 20 eingeschlossen, das mit einer Spindel 22 verbunden ist. An dem Mähwerk 10 ist eine Reinigungseinrichtung 24 angebracht, die dazu vorgesehen ist, Wasser zu liefern, um Ablagerungen von einer Unterseite 26 jeder der Schneidkammern 14 zu entfernen. Die Reinigungseinrichtung 24, wie sie in den vergrößerten Ansichten der Figuren 3 - 5 dargestellt ist, weist eine Halterung 28 auf, welche einen geraden Bereich 30 und einen abgewinkelten Bereich 32 umfasst. Jeder dieser Bereiche 30, 32 weist sich durch ihn hindurch erstreckende Aussparungen 34, 36 auf. Ein Anbringen der Reinigungseinrichtung 24 an einen Flansch 38 des Mähwerks 10 erfolgt durch ein Einsetzen von Schrauben 40 durch den geraden Bereich 30 und im Anschluss in eine entsprechende Aussparung 42 hinein, welche in dem Flansch 38 vorgesehen ist. Um die Reinigungseinrichtung 24 an dem Flansch 38 zu sichern, wird eine Mutter 44 an der Schraube 40 auf einer Seite des Flansches 38 angebracht, welche der Seite, von der sie in ihn eingetreten ist, gegenüber liegt. Wie es in Fig. 3 gesehen werden kann, ist eine Schnellkupplung 46 bzw. ein Anschlussstück durch den abgewinkelten Bereich 32 der Halterung 28 geführt und an diesem befestigt und weist eine Öffnung 48 auf. Eine Leitung 50 ist mit dem Anschlussstück 46 an der Öffnung 48 verbunden, um ein Reinigungsmittel, so wie Wasser, an die Schneidkammer 14 zu liefern. Mit dem gegenüberliegenden Endbereich 48 der Leitung 50 ist eine Befestigungsplatte 54 starr verbunden, welche zumindest drei durch sie hindurchgehende Aussparungen 56, 58, 60 aufweist, wie es in Fig. 5 dargestellt ist. Jede der drei Aussparungen 56, 58, 60 ist in der Mitte der Befestigungsplatte 54 und entlang einer von dort ausgehenden Längsachse angeordnet. Die mittlere Aussparung 58 ist eine Durchflussöffnung, an welcher die Leitung 50 direkt angeschlossen ist, um einen Wasserstrom hindurch zu erlauben. Jeder der Anschlüsse, d.h. das Anschlussstück 46 an der Halterung 28, die Leitung 50 an das Anschlussstück 46 und die Halterung 28 und die Leitung 50 an der Anschlussplatte 54, ist vorzugsweise verschweißt, so dass eine einteilige Konstruktion unter den entsprechenden Bauteilen gebildet wird. Darüber hinaus sind die Halterung 28, das Anschlussstück 46, die Leitung 50 und die Anschlussplatte 54 vorzugsweise aus Metall hergestellt.

Wie es in den Figuren 3 - 5 dargestellt wird, ist mit der Anschlussplatte 54 ein länglicher Zusammenbau 62 verbunden, welcher gewölbte Bereiche aufweist, wobei der Zusammenbau 62 vorgesehen ist, um Wasser durch die Schneidkammer 14 und auf deren Unterseite(n) 26 zu verteilen. Der Zusammenbau 62 weist jeweils eine erste und eine zweite Platte 64, 66 auf, welche miteinander durch Schrauben 68 und Muttern 70 verbunden sind, welche jeweils Aussparungen 72, 74 zugeordnet sind. Die Aussparungen 72, 74 korrespondieren mit den Aussparungen 56, 60 der Anschlussplatte 54 und sind mit diesen ausgerichtet, um einen ruhigen und ungestörten Wasserstrom durch die mittlere Aussparung 58 zu ermöglichen. Wie es in Fig. 2 dargestellt ist, ist die erste Platte 64 eben ausgebildet und mit Bezug auf den Oberflächenbereich, der zu seiner Verbindung mit der zweiten Platte 66 benötigt wird, mit einem vergrößerten Bereich 76 versehen, wobei die erste Platte 64 direkt an die Anschlussplatte 54 angrenzend verbunden ist. In den vergrößerten Bereichen 76 sind Anschlussaussparungen 78, 80 jeweils in jeder der Platten 64, 66 vorgesehen, um ein Sichern mit einer Unterseite 81 des Flansches 38 zu erlauben. Ein Anbringen jeder der Platten 64, 66 an den Flansch 38 wird durch die Verwendung einer Schraube 82 und einer Mutter 84 erzielt. Es wird bevorzugt, dass die Platte 64 aus Metall besteht, um so beim Anbringen eine sanfte Verbindung mit dem Mähwerk 10 zu erlauben. Zusätzlich kann, in einem Versuch sowohl die Herstellungskosten als auch die Unannehmlichkeit der Korrosion zu reduzieren, in Betracht gezogen werden, die Platte aus Kunststoff herzustellen.

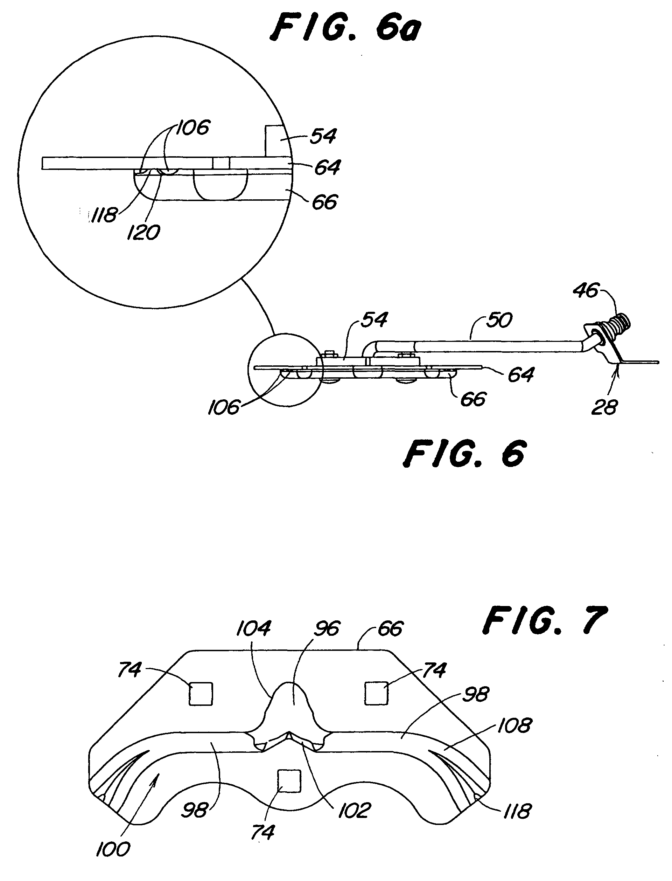

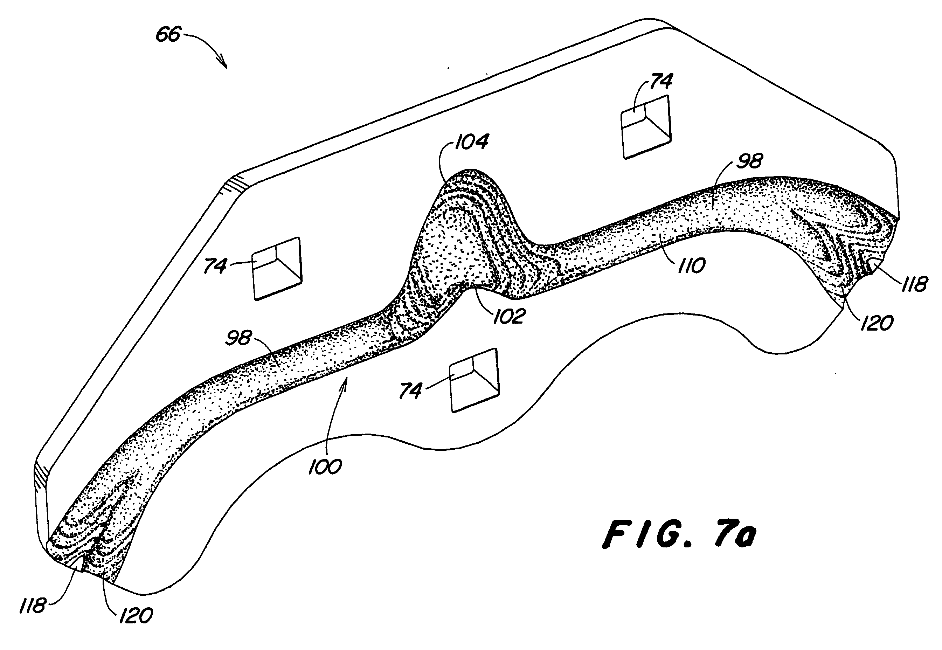

Um einen Wasserstrom in den Zusammenbau 62 zu erlauben, ist die erste Platte 64 mit einer Bohrung 86 versehen, wie es aus Fig. 5 hervorgeht. Werden nun wiederum die Figur 5 und auch die Figuren 7 und 7a betrachtet, so weist die Platte 66 eine ausgehöhlte Ausbildung an ihrer Oberseite 90 auf. Diese Ausbildung umfasst eine Öffnung 88, welche Flüssigkeit von der Leitung 50 aufnimmt. Die Öffnung 88 wird durch eine untere Oberfläche 92 und eine Wandung 94 begrenzt, welche einen Hohlraum 96 bestimmen, welcher wiederum Wasser von der Leitung 50 erhält. Von dem Hohlraum 96 wird Wasser schnell zu zwei Durchgängen 98 transportiert, welche zusammen mit dem Hohlraum 96 einen halb-ovalen Kanal 100 bilden, um Wasser in die zweite Platte 66 zu leiten. Der Hohlraum 96 weist Seiten 102, 104 auf, welche mit auseinander strebenden Durchgängen 98 oder Flüssigkeit leitenden Oberflächen, wie sie in den Figuren 7 und 7a gezeigt werden, verbunden sind. Wie es Fig. 7a entnommen werden kann, ist der Hohlraum 96 auf der ersten Seite 102 in einer umgekehrt V-förmigen Ausbildung ausgeführt, um Wasser in die Durchgänge 98 abzuleiten, nachdem es in den Hohlraum 96 eingetreten ist. Zusätzlich trägt die Seite 104 des Hohlraums 96, welche in Form einer umgekehrten Parabel oder eines im wesentlichen umgekehrten U's ausgebildet ist, dazu bei, das Wasser zu den Durchgängen 98 zu leiten. Die Durchgänge 98 sind bogenförmig ausgebildet, um die Herstellungskosten der zweiten Platte 66 zu verringern und auch um zu dem im Allgemeinen gebogenen/ gewölbten Design der ersten Platte 64 zu passen.

Wie es in den Figuren 3, 6 und 6a dargestellt ist, ist die erste Platte 64 mit der zweiten Platte 66 verbunden, um eine Verteilung von Wasser in die Schneidkammer 14 zu bewirken. Genau gesagt, wird die Verteilung durch das Verbinden der ersten Platte 64 mit der Oberfläche 90 erzielt, in der ein Kanal 100 bestimmt ist und der in der zweiten Platte 66 eingefasst ist, um so ein Paar von Düsen 106 in jedem seiner Endbereiche 108 zu bilden, die es Wasser erlauben, in die Schneidkammer 14 abgegeben zu werden. Die Endbereiche 108 sind mit Bezug auf eine Unterseite 110 der Durchgänge 98 in der Höhe angehoben, um eine Verengung der Düsen 106, durch die Wasser abgegeben wird, zu bewirken. Eine resultierende, verengte Fläche zwischen der ersten Platte 64 und den Endbereichen 108 erlaubt eine Abgabe von Wasser mit einer höheren Strömungsgeschwindigkeit, als sie auftreten würde, wenn eine Fläche von der Unterseite 110 unter Annahme gleicher Druckbeaufschlagung berechnet würde.

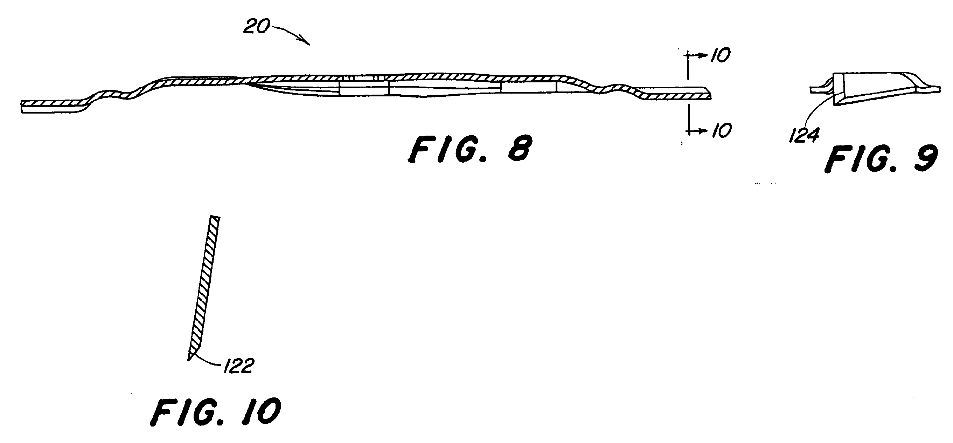

Eine Reinigung der Unterseiten 26 der Schneidkammern 14 wird vorzugsweise in der folgenden Art und Weise erreicht. Als erstes wird, wie es aus Fig. 3 ersehen werden kann, eine Bedienungsperson einen (Garten-)Schlauch mit der Reinigungseinrichtung 24 verbinden, indem der Schlauch 112 in eine übliche Schnellkupplung 114 eingesetzt wird, welche mit dem Anschlussstück 46, vorzugsweise einer Schnellkupplung, verbunden wird. Es wird dann Wasser von dem Schlauch 112 in die Leitung 50 und in den Zusammenbau 62 fließen, um das Wasser in die Schneidkammern 14 zu verteilen. Wie es aus Fig. 2 entnommen werden kann, wird das Wasser bei einem Eintreten in die Schneidkammern 14 von dem Zusammenbau 62 in vier einzelnen, aufgefächerten Strahlen 116 versprüht. Die Strahlen 116 sind durch eine Teileinrichtung 118, wie sie in den Figuren 6 und 7 dargestellt wird, geteilt. An den Endbereichen 108 der Durchgänge 98 sind die Teileinrichtungen 118 zwischen Höhenanstiegen 120 bezogen auf die Unterseite 110 angeordnet. Die Höhenanstiege 120 treten langsam entlang einer sich allmählich erhöhenden Steigung auf, um es dem Wasser zu erlauben, leicht zu den Düsen 106 zu fließen, während ein Höhenanstieg erfolgt. Aufgrund des/der Höhenanstieges 120 in den Endbereichen 108, sind die Strahlen 116 im wesentlich über die Schneidmesser 20 gerichtet, selbst obwohl die Düsen 106 in dem Zusammenbau 62 in einer Ebene angeordnet sind, welche nur leicht oberhalb der Schneidmesser 20 in einem vorderen Bereich des Mähwerks 10 angeordnet sind. Zusätzliche Unterstützung in der Verteilung des Wasser in der ganzen Schneidkammer 14 ist die Breite und das gebogene Design des Kanals 100. Bei Verwendung einer üblichen (Haushalts-)Durchflussrate von 5 - 10 Gallonen (22,7295 1 - 45,458 1) pro Minute ist es den Strahlen 116 in einfacher Weise erlaubt, über die Schneidmesser 20 zu strömen und aufgrund der Teileinrichtung 118 auf gegenüberliegende Seiten der Spindeln 22, wie es in Fig. 2 dargestellt ist, zu strömen, um mit den Seiten 126 der Schneidkammer 14 in Kontakt zu treten, welche denen, an denen sie eingetreten sind, gegenüberliegen. Jede der Düsen 106, durch welche die Strahlen 116 strömen, ist vorzugsweise derart ausgelegt, dass sie eine Fläche von etwa 0,0217 square inches (~0,14 cm²)auf jeder Seite der Teileinrichtung 118 haben. Bei einem Kontakt mit der gegenüberliegenden Seite 126 der Schneidkammer 14 wird das Wasser in die Schneidmesser 20 hinein abgelenkt und durch die Schneidkanten 122 angehoben und über die Schneidenflügel 124 (in den Fig. 8 - 10 dargestellt) hinweggefegt. Wenn dies geschieht, wird das Wasser zu der Unterseite der Schneidkammer 14 oberhalb der Schneidmesser 20 verteilt, um eine allumfassende Reinigung der Schneidkammer 14 zu erzielen. Um die Verteilung und die Zirkulation des Wassers innerhalb der Schneidkammer 14 zu erhöhen, können Flügel mit einer größeren Hubcharakteristik verwendet werden.

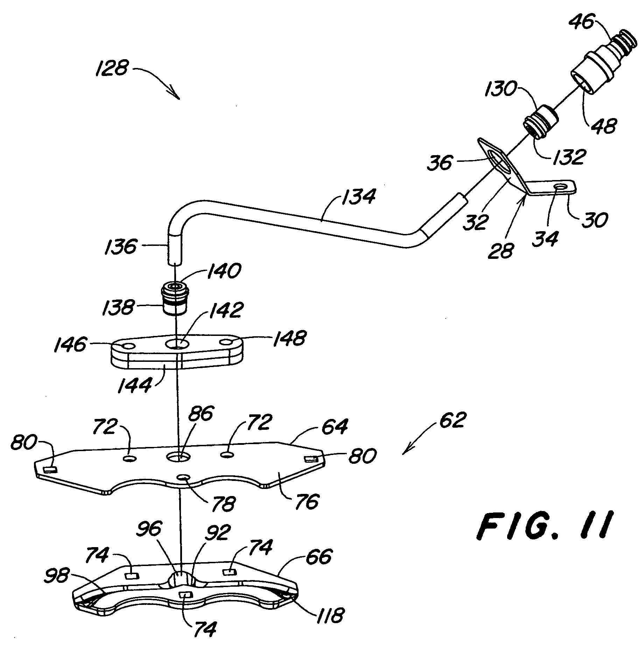

Wie es aus Fig. 11 ersehen werden kann, erzielt eine weitere Form der Erfindung alle zuvor beschriebenen Vorteile, während eine größere Anpassungsfähigkeit der Reinigungseinrichtung erlaubt wird. Wird nun Fig. 11 betrachtet, so wird dort eine Reinigungseinrichtung 128 zur Verfügung gestellt, welche ein flexible Leitung 134 verwendet, welche es der Leitung 134 der Reinigungseinrichtung 134 erlaubt, angrenzend an und um Hindernisse, die auf dem Mähwerk 10 angeordnet sind, herum angebracht zu sein. Bauteile, die mit den in den Figuren 1- 10 identisch sind, werden mit entsprechenden Referenznummern bezeichnet, wohingegen abweichende Bauteile mit abweichenden Nummern bezeichnet werden. In eine Öffnung 48 eines Anschlussstückes 46 ist ein erstes Kupplungsstück 130 eingesetzt, wobei der Eingriff des Anschlussstückes 46 und des Kupplungsstücks 130 beide an der Halterung 28 sichert. In eine Aussparung 132 des Kupplungsstücks 130 ist eine flexible, vorzugsweise aus Kunststoff bestehende Leitung 134 eingesetzt, welche eine Veränderung der Gesamtlängen-Dimension der Reinigungseinrichtung 128 erlaubt. Wie es der Fig. 11 entnommen werden kann, ist an einem gegenüberliegenden Endbereich 136 der Leitung 134 ein zweites Kupplungsstück 138 angebracht, wobei das zweite Kupplungsstück 138 in einer mittleren Aussparung 142 einer Anschlussplatte 144 eingesetzt ist, welche eine Verbindung der Leitung 134, und daher eine Wasserzufuhr, zu dem Zusammenbau 62 ermöglicht. Wie die zweite Platte 66, ist die Anschlussplatte 144, welche vorzugsweise aus Kunststoff gefertigt ist, mit drei Aussparungen 142, 146, 148 versehen, wobei die mittlere Aussparung 142 eine Durchflussöffnung mit zwei Anschlussöffnungen 146, 148 auf gegenüberliegenden Seiten darstellt. Ähnlich zu der Verbindung der zweiten Platte 66 ist die Anschlussplatte 144 mit dem Zusammenbau 62 durch die Verwendung von Schrauben und Muttern verbunden. Durch die Verwendung der oben angesprochenen Leitung 134 und der Kupplungsstücke 130, 138 kann eine Demontage der Reinigungseinrichtung 128 in einfacher Weise erfolgen, so um eine periodische Reinigung der Reinigungseinrichtung 128 zu erlauben.

Mit der vorliegenden Erfindung wird eine einfach zusammenbaubare Reinigungseinrichtung zur Verfügung gestellt, die es einer Bedienungsperson erlaubt, die Unterseite einer oder mehrerer Schneidkammern eines Mähwerks zu reinigen. Ein weiterer Vorteil besteht darin, dass die Form der Reinigungseinrichtung schnell an ein Mähwerk im Rahmen eines Nachrüstens angepasst werden kann. Durch diese Vorteile ist es einer Bedienungsperson möglich, die Zeit und Anstrengung zu reduzieren, die notwendig ist, um eine Instandhaltung im Rahmen einer entweder privaten und/oder professionellen Landschaftspflege abzuschließen.

Während die vorliegende Erfindung in Verbindung mit einer bestimmten Ausführungsform beschrieben wurde, sollte es deutlich sein, dass viele Alternativen, Modifikationen und Variationen für den Fachmann im Licht der vorangegangenen Beschreibung offensichtlich sein werden. Entsprechend ist es beabsichtigt, dass die Erfindung alle solchen Alternativen, Modifikationen und Variationen, welche in den Geist und Schutzbereich der folgenden Ansprüche fallen, umfasst.

## Patentansprüche

1. Reinigungseinrichtung (24) mit einer ersten Platte (64), mittels der die Reinigungseinrichtung (24) an einem Mähwerk (10) angebracht werden kann, welche eine erste Aussparung (58) aufweist, und einer Leitung (50) welche einenends mit der Aussparung (58) und andernends mit einem Anschlussstück (46) zur Verbindung mit einer Flüssigkeitsquelle verbindbar ist, und mit einer zweiten Platte (66), die mit der ersten Platte (64) derart zusammenwirkt, dass ein Flüssigkeitsstrom durch die Platten (64, 66) gesteuert wird bzw. dass die Reinigungseinrichtung (24) wenigstens einen gerichteten Flüssigkeitsstrahl abgibt.

2. Reinigungseinrichtung nach Anspruch 1, **dadurch gekennzeichnet, dass** die Reinigungseinrichtung (24) wenigstens zwei zumindest im wesentlichen divergierende Flüssigkeitsstrahlen abgibt.

3. Reinigungseinrichtung nach Anspruch 1 oder 2, **dadurch gekennzeichnet, dass** die zweite Platte (66) einen Kanal (100) aufweist, welcher vorzugsweise einen vorzugsweise zumindest im wesentlichen zentral angeordneten Hohlraum (96) aufweist, wobei die Flüssigkeitszufuhr von der ersten Platte (64) zu dem Kanal (100) über den Hohlraum (96) erfolgt.

4. Reinigungseinrichtung nach Anspruch 3, **dadurch gekennzeichnet, dass** der Flüssigkeitsaustritt aus der Reinigungseinrichtung (24) in einem oder mehreren Endbereich(en) (108) des Kanals (100) erfolgt.

5. Reinigungseinrichtung nach Anspruch 3 oder 4, **dadurch gekennzeichnet, dass** eine Seite (104) des Hohlraums (96) zumindest im wesentlichen umgekehrt V-förmig ausgebildet ist und/oder ein weiterer vorzugsweise der Seite (104) gegenüberliegender Bereich zumindest im wesentlichen halboval ausgebildet ist.

6. Reinigungseinrichtung nach einem oder mehreren der Ansprüche 2 bis 5, **dadurch gekennzeichnet, dass** zumindest drei Seitenwände des Kanals (100) bezogen auf den Hohlraum (96) bzw. auf eine Unterseite der zweiten Platte (66) vorzugsweise sanft ansteigend vorgesehen ist.

7. Reinigungseinrichtung nach einem oder mehreren der Ansprüche 4 bis 6, **dadurch gekennzeichnet, dass** wenigstens ein Endbereich (108) des Kanals (100) eine Teileinrichtung (118) aufweist, welche den Flüssigkeitsstrom aufteilt.

8. Reinigungseinrichtung nach einem oder mehreren der vorherigen Ansprüche, **dadurch gekennzeichnet, dass** die erste Platte (64) und die zweite Platte (66) wenigstens eine Düse (106) bilden, welche vorzugsweise in einem Endbereich (108) des Kanals (100) angeordnet ist und einen vorzugsweise fächerartig ausgebildeten Flüssigkeitsstrahl abgibt.

9. Reinigungseinrichtung nach einem oder mehreren der vorherigen Ansprüche, **dadurch gekennzeichnet, dass** die Leitung zumindest im wesentlichen starr und/oder zumindest bereichsweise flexibel ausgebildet ist.

10. Reinigungseinrichtung nach einem oder mehreren der vorherigen Ansprüche, **dadurch gekennzeichnet, dass** die Platten (64, 66) aus Metall und/oder Kunststoff bestehen.

11. Mähwerk mit einer Schneidkammer (14), wenigstens einem in der Schneidkammer (14) rotierbar antreibbaren Schneidmesser (20) und mit einer Reinigungseinrichtung (24) nach einem oder mehreren der vorherigen Ansprüche.

12. Mähwerk nach Anspruch 11, **dadurch gekennzeichnet, dass** die Flüssigkeitsstrahlen vorzugsweise auf gegenüberliegende Seiten oberhalb der Schneidmesser (20) auf einen der Reinigungseinrichtung (24) gegenüberliegenden Bereich der Schneidkammer (14) gerichtet sind.

13. Mähwerk nach Anspruch 11 oder 12, **dadurch gekennzeichnet, dass** das Mähwerk (10) zwei oder mehr Schneidkammern (14) aufweist, wobei die Reinigungseinrichtung (24) zumindest in zwei der Schneidkammern (14) gleichzeitig wenigstens einen Flüssigkeitsstrahl einbringt.
